(19) Europäisches Patentamt
European Patent Office
Office européen des brevets

(11) Publication number: **0 201 355 B1**

(12) # EUROPEAN PATENT SPECIFICATION

(45) Date of publication of patent specification: **07.08.91**

(51) Int. Cl.5: **E21B 33/13**, E21B 43/25, E21B 21/00, C04B 24/24, C04B 28/02

(21) Application number: **86303564.8**

(22) Date of filing: **09.05.86**

(54) **Fluid loss control and compositions for use therein.**

(30) Priority: **09.05.85 US 732096**
**20.06.85 US 747058**
**23.09.85 US 779140**

(43) Date of publication of application:
**12.11.86 Bulletin 86/46**

(45) Publication of the grant of the patent:
**07.08.91 Bulletin 91/32**

(84) Designated Contracting States:
**AT BE CH DE FR GB IT LI LU NL SE**

(56) References cited:
**EP-A- 0 131 306**
**US-A- 3 511 314**
**US-A- 4 413 681**
**US-A- 4 482 383**

(73) Proprietor: **ETHYL CORPORATION**
**Ethyl Tower 451 Florida Boulevard**
**Baton Rouge Louisiana 70801(US)**

(72) Inventor: **Roark, David Neal**
**5130 Spotsylvania**
**Baton Rouge, LA. 70817(US)**
Inventor: **Nugent, Adam, Jr.**
**3948 Pasadena Drive**
**Baton Rouge, LA 70814(US)**
Inventor: **Bandlish, Baldev Kumar**
**1640 Brainaid**
**Cleveland Ohio 44124(US)**

(74) Representative: **Collier, Jeremy Austin Grey et al**
**J.A.Kemp & Co., 14 South Square, Gray's Inn**
**London WC1R 5LX(GB)**

EP 0 201 355 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to methods for controlling fluid loss in well cementing operations and to formulations particularly adapted for this use.

Over the years a number of low fluid-loss systems, formulations, and application techniques have been developed for permanent-type well completions and in more recent times, for conventional wells. See in this connection, D. K. Smith, Cementing, Society of Petroleum Engineers of AIME, pub., New York and Dallas, 1976, and C. M. Stout and W. W. Wahl, Journal of Petroleum Technology, September 1960, pages 20-24.

Among the leading systems for controlling fluid loss in well cementing operations are systems based on polyalkylene polyamines, polyalkylene polyimines, and mixtures thereof. See for example Gibson et al U. S. Pat. No. 3,491,049; Scott et al U. S. Pat. No. 3,511,314; Crinkelmeyer et al U. S. Pat. No. 4,131,578; McKenzie U. S. Pat. No. 4,413,681; Spitz et al U. S. Pat. No. 4,482,381; and McKenzie et al, Oil & Gas Journal, March 1992, pages 146-148.

As pointed out in the Spitz et al US-A-4,482,381 patent, the liquid polyamines of this type require addition of sulfonated polymers to provide effective fluid loss control. While such combinations do function to control fluid loss, they cause destabilization of the cement slurry. In order to ameliorate this problem the manufacturers of the polyalkylene polyamines and polyalkylene polyimines resorted to chemical modification of these polymers by cross-linking. Unfortunately the additional processing required increased the cost of the materials quite significantly.

In accordance with this invention new, highly effective fluid-loss-control additive systems have been discovered for use in cementing subterranean well formations with an aqueous well cement slurry. These additive systems comprise, in combination, an anhydrous mixture of (i) a lignosulfonate polymer or a condensed naphthalene sulfonate polymer or a sulfonated vinylaromatic polymer or any combination thereof and (ii) an unmodified or chemically modified polymer of monoallylamine represented by the general formula:

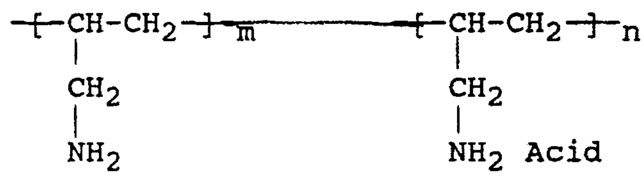

where m is a number from zero to 100,000 and n is a number from zero to 100,000, the sum of m plus n being in the range of 10 to 100,000, said polymer of monoallylamine, when chemically modified being further characterized by (a) containing small quantities of polymerizable comonomer containing two or more double bonds in the molecule, or (b) being crosslinked or bridged with small quantities of a crosslinking agent having two or more groups reactable with the amino group. Experiments have shown that this invention makes it possible to control very effectively the amount of fluid loss that would otherwise occur in an aqueous cement slurry when using neither such additive (i) or (ii), or either such additive (i) or (ii) in the absence of the other. In addition, tests have shown that destabilization of cement slurries was not experienced when using systems of this invention. In other words, the slurried cement does not tend to settle out of any significant extent prior to curing. Since the sulfonated polymers are not only commercially available but are often used in downhole cement slurries, this invention makes it possible to overcome excessive fluid loss and achieve improved control of cementing treatments, all at relatively low cost.

As noted above, the polymer of monoallylamine used in the practice of this invention may be in the form of a free base (i.e. the pendant $-CH_2NH_2$ groups are not neutralized with an acid) or it may be in the form of a partially or completely neutralized polymer (i.e., some or all of the pendant $-CH_2NH_2$ groups are neutralized with an acid and thus are in salt form). Such salts are also known in the chemical arts as poly-(monoallylammonium) salts.

Accordingly, the polymers of monoallylamine used pursuant to this invention may be depicted by the general formula:

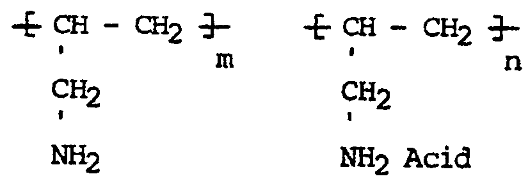

where m is a number from zero to 100,000 or more and n is a number from zero to 100,000 or more, the sum of m plus n being in the range of 10 to 100,000 or more. In the formula, Acid represents an organic or inorganic acid complexed with the amino group in the form of a salt. When n is zero or is very small relative to m, the polymer may be deemed for all practical purposes a poly(monoallylamine). On the other hand when m is zero or is very small relative to n, the polymer may be deemed for all practical purposes a salt of poly(monoallylamine). There is of course no hard and fast dividing line between the two since the transition from one end of the scale to the other is a continuum.

Other polymers of monoallylamine used pursuant to this invention are polymers as above depicted that have been chemically modified during their manufacture by copolymerization with small quantities of suitable polymerizable comonomers containing two or more double bonds in the molecule (e.g., triallylamine hydrochloride and the like) or by crosslinking or bridging with small quantities of a crosslinking agent having two or more groups reactable with the amino group (e.g., epichlorohydrin, ethylene dichloride, and the like). These chemically modified monoallylamine polymers have essentially the same properties and characteristics as the unmodified polymers depicted above except of course those related to molecular weight.

Unless the context indicates otherwise, all such polymers, whether in free or in salt form and whether in unmodified or modified (copolymerized, or crosslinked or bridged) form, will be collectively referred to hereinafter as a "polymer of monoallylamine".

In another of its embodiments this invention provides in a method of cementing a subterranean oil well formation with an aqueous well cement slurry, the improvement in which the slurry contains the combination of the sulfonated polymer and the polymer of monoallylamine, to provide controlled dehydration of the slurry during the well cementing operation. By treating an aqueous well cement slurry with suitable quantities of the sulfonated polymer and, for example, poly(monoallylamine) or poly(monoallylammonium) salt of appropriate molecular weight, the slurry has enhanced resistance to dehydration during the cementing operation.

A further embodiment of this invention involves the provision in an oil well cement formulation adapted for use in preparing well cement slurries of both a sulfonate polymer and a polymer of monoallylamine, to provide controlled dehydration of the slurry during the well cementing operation.

Still another embodiment of this invention involves providing in an oil well cement slurry adapted for use in a subterranean well cementing operation a fluid-loss-control substance formed by interaction in an aqueous medium of the sulfonated polymer and the polymer of monoallylamine, to provide a gelatinous substance capable of controlling dehydration of the slurry during the well cementing operation.

These and other embodiments of the invention will be still further apparent from the ensuing description.

As will be shown hereinafter, even a polymer of monoallylamine that is essentially insoluble in water can be successfully used in the practice of this invention. In short, use may be made of any polymer of monoallylamine (i.e., poly(monoallylamine) or poly(monoallylammonium) salt, whether a homopolymer or a copolymer or a crosslinked homopolymer or copolymer) that forms a gelatinous substance in the presence of water and the sulfonated polymer. In general however it is preferred in the practice of this invention to use a water-soluble polymer of monoallylamine.

Illustrative polymers of monoallylamine include:

- poly(monoallylamine)
- poly(monoallylammonium chloride) (also referred to as polyallylamine hydrochloride)
- poly(monoallylammonium bromide)
- poly(monoallylammonium bisulfate)
- poly(monoallylammonium sulfate)
- poly(monoallylammonium nitrate)
- poly(monoallylammonium dihydrogen phosphate)
- poly(monoallylammonium hydrogen phosphate)
- poly(monoallylammonium phosphate)

- poly(monoallylammonium formate)
- poly(monoallylammonium acetate)
- poly(monoallylammonium propionate)
- poly(monoallylammonium p-toluenesulfonate)

and like polymers. The water solubility of some salts such as the sulfate and phosphate salts of polymers of monoallylamine tends to decrease with increasing sulfate or phosphate content. In fact, completely neutralized poly(monoallylamine) sulfate (poly(monoallylammonium sulfate)) and completely neutralized poly(monoallylamine) phosphate (poly(monoallylammonium phosphate)) tend to be essentially water insoluble. The preferred polymeric salts are the hydrochlorides.

Polymers of monoallylamine falling within a wide range of molecular weights are suitable. For example, use may be made of polymers in salt form (e.g., unmodified poly(monoallylammonium hydrochloride) having a weight average molecular weight (as determined by the equilibrium sedimentation method -- see B. Vollmert, Polymer Chemistry, Springer-Verlag, New York, Copyright 1973, pp 361-369) -- ranging upwards from about 1,000, and preferably ranging upwards from about 7,000. Modified (e.g., suitably crosslinked) and unmodified polymers in salt form with weight average molecular weights below about 500,000 are preferred, those falling in the range of 10,000 to 200,000 being particularly preferred. The weight average molecular weight (same test method) of the free (i.e., unneutralized) uncrosslinked poly-(monoallylamines) ranges upwards from about 600, preferably upwards from about 3,250, and most preferably upwards from about 4,500. Modified (e.g., suitably crosslinked) and unmodified polymers in free (i.e., non-salt) form with weight average molecular weights below about 325,000 are preferred. Polymers of monoallylamine having weight average molecular weights falling outside of the foregoing molecular weight ranges may also be used, provided of course that their suitability and efficacy are established, for example by performing a few tests.

Methods for the synthesis of polymers of monoallylamine (homopolymers and copolymers, both free bases and salts thereof, and crosslinked or bridged polymers thereof) have been reported in the literature. See for example U. S. Pat. No. 4,504,640 granted March 12, 1985, U. S. Pat. No. 4, 528,347 granted July 9, 1985, European Patent Application 95,233 published November 30, 1983, European Patent Application 131,306, published January 16, 1985, and S. Harada & S. Hasegawa, Macromolecular Chem., Rapid Communications, 5, 27-31 (1984). One currently recommended procedure involves hydrochlorination of allylamine followed by radical polymerization of the resulting allylamine hydrochloride. To convert the hydrochloride salt to the free polyallylamine (e.g., from which other salts can readily be produced) either of two different procedures is usually employed. One involves treatment of the polyallylamine hydrochloride solution with an alkali base such as sodium hydroxide to form an aqueous solution of the sodium chloride salt which is then subjected to dialysis and lyophilization. The other method utilizes a strong basic ion exchange resin for converting the polyallylamine hydroohloride solution into the polyallylamine solution which is then subjected to lyophilization to produce the free polymer. Various molecular weight grades of polyallylamine and of polyallylamine hydrochloride are presently available from Nitto Boseki Co., Ltd., Tokyo, Japan.

In preparing the crosslinked polymers of monoallylamine, use may be made of a variety of crosslinking agents. For example use may be made of alpha,beta-epoxy-gamma-haloalkanes, e.g., 3-chloro-1,2-epoxypropane, 3-bromo-1,2-epoxypropane, and 3-iodo-1,2-epoxypropane; and their higher homologs such as 3-chloro-1,2-epoxybutane, 3-bromo-1,2-epoxybutane, 3-iodo-1,2-epoxybutane, 3-chloro-1,2-epoxypentane, 3-chloro-1,2-epoxyhexane, 3-chloro-1,2-epoxyheptane. Likewise, dihaloalkanes may be employed for this purpose, a few typical examples being 1 ,2-dihaloethanes such as 1,2-dichloroethane (ethylene dichloride), 1,2-dibromoethane (ethylene dibromide), and 1-bromo-2-chloroethane; and their higher homologs such as 1,3-dichloropropane, 1,3-dibromopropane, 1,3-dichlorobutane, 1,4-dichlorobutane, 1,3-dibromobutane, 1,4-dibromobutane, 1,5-dichloropentane, 1,7-dichloro-4,4-dimethylheptane, and the like. Other crosslinking agents, such as dicarboxyl acid chlorides, mono or dialdehydes, and the like, known to those skilled in the art for crosslinking other polymeric materials, may also be used in effecting this crosslinking.

When producing crosslinked polymers of monoallylamine the amount of the crosslinking agent employed should be controlled so as to avoid the formation of excessively crosslinked products. Ordinarily the proportions used will fall in the range of 50 to 8,000 parts by weight of crosslinking agent per million parts by weight of the monoallylamine homopolymer or copolymer being subjected to crosslinking. Departures from this range are feasible, and may be found useful. Preferably, from 250 to 8,000 ppm of crosslinking agent is employed with poly(monoallylamine) having a weight average molecular weight in the range of 5,000 to 100,000, and from 50 to 250 ppm of crosslinking agent is employed with poly(monoallylamine) having a weight average molecular weight in the range of 100,000 to 350,000. In other words, it is desirable that the relative proportion of crosslinking agent to poly(monoallylamine) be inversely proportional to the

weight average molecular weight of the poly(monoallylamine) being crosslinked.

The poly(monoallylamine) subjected to the crosslinking process may be preformed or it may be generated or formed in situ. Preferably the poly(monoallylamine) is formed by neutralizing or partially neutralizing a poly(monoallylammonium) salt such as:

- poly(monoallylammoium chloride)
- poly(monoallylammonium bromide)
- poly(monoallylammonium bisulfate)
- poly(monoallylammonium sulfate)
- poly(monoallylammonium nitrate)
- poly(monoallylammonium dihydrogen phosphate)
- poly(monoallylammonium hydrogen phosphate) and
- poly(monoallylammonium phosphate).

It is particularly desirable to form the poly(monoallylamine) in situ by rendering an aqueous medium containing one or more of these acid salts neutral or alkaline in pH by the addition of a suitably strong base such as sodium hydroxide, potassium hydroxide, or the like. The preferred polymers for this use are the poly(monoallylammonium chlorides).

Among the polymerizable comonomers that may be used in forming monoallylamine copolymers are diallylamine hydrochloride, triallylamine hydrochloride, and the like. The copolymers should contain at least 95% by weight and preferably at least 98% by weight of monoallylamine with the balance being one or more such comonomers.

The sulfonated polymers for use in the practice of this invention are the lignosulfonates (i.e., sulfonated lignins), the condensed naphthalene sulfonates, and the sulfonated vinylaromatic polymers.

The lignosulfonates are exemplified by the various salts of sulfonated lignin such as the alkali metal lignosulfonates, the alkaline earth metal lignosulfonates, and the ammonium lignosulfonates. These include calcium lignosulfonate, calcium sodium lignosulfonate, sodium lignosulfonate, magnesium lignosulfonate, calcium·potassium lignosulfonate, barium lignosulfonate, potassium lignosulfonate, lithium lignosulfonate, etc., as well as lignosulfonates that have been modified with organic acids, and the like. Some of these materials, especially the lignins (salts of lignosulfonic acid which are derived from wood) and the lignosulfonates modified with organic acids, are available as articles of commerce. They are often used as cement retarders -- i.e., as additives to prevent the cement from setting too quickly -- or as additives to increase the pumpability of cement slurries in high-temperature wells. In the practice of this invention the lignosulfonates exhibit a new property, that of reacting with the polymer of monoallylamine in the aqueous system to create a gelatinous material that tends to plug porous zones and minimize water loss from the cement slurry.

The various condensed naphthalene sulfonates that may be employed are exemplified by the naphthalene sulfonic acid condensation products available commercially under the trade designation Lomar D. It is understood that these materials are condensation products of formaldehyde and mononaphthalene sulfonic acid. Such condensation products are indicated in U. S. Pat. No. 3,511,314 to have molecular weights between 1,000 and 3,000 but use may be made of any condensed naphthalene sulfonate that reacts with the polymer of monoallylamine in the aqueous system to create a gelatinous material that tends to plug porous zones and minimize water loss from the cement slurry.

The sulfonated vinylaromatic polymers that may be used as the sulfonated polymeric component in the practice of this invention are exemplified by the sulfonated polystyrenes and sulfonated vinyltoluenes, which are preferably used in their water-soluble salt forms. As pointed out in U. S. Pat. No. 4,413,681 these substances can vary very widely in molecular weight, for example from 500,000 to 8,000,000, and suitable sulfonated polymers of this type are also available as articles of commerce.

In practicing this invention any suitable lignosulfonate, condensed naphthalene sulfonate, or sulfonated vinylaromatic polymer may be used either singly or in various combinations with each other. To determine the suitability of any given sulfonated polymer or mixture of sulfonated polymers, all that is required is to perform a few simple tests first to establish that the given sulfonated polymer or mixture of sulfonated polymers reacts with the polymer of monoallylamine in an aqueous system to create a gelatinous material and secondly to establish that the gelatinous material will tend to plug porous zones and minimize water loss from a cement slurry. Use of the standard test procedures referred to in the ensuing examples is deemed particularly desirable for these purposes.

For further details concerning sulfonated polymers of the types suitable for use in the practice of this invention, reference may be had, for example, to Gibson et al U. S. Pat. No. 3,491,049; Scott et al U. S. Pat. No. 3,511,314; Crinkelmeyer et al U. S. Pat. No. 4,131,578; McKenzie U. S. Pat. No. 4,413,681; Spitz et al U. S. Pat. No. 4,482,381; McKenzie et al, Oil & Gas Journal, March 1982, pages 146-148, and to the

references cited therein, all disclosures relative to sulfonated polymers.

While not necessary, use may be made with water-soluble polymers of monoallylamine of supplemental additives that serve as in situ cross-linking agents for such polymers when the polymer and the cross-linking agent are combined in an aqueous medium especially at a somewhat elevated temperature (e.g., 50 to 100° C). Examples of such cross-linking agents are ethylene dichloride, epichlorohydrin, ethylene dibromide, as well as other similar substances well known to those skilled in the art. Amounts of such cross-linking agents ranging from 1 x $10^{-4}$ to 5 x $10^{-3}$ moles per mole of poly(monoallylamine) or water-soluble salt thereof are generally sufficient to produce cross-linking to an extent suitable for this purpose.

In practicing this invention the polymer of monoallylamine may be premixed with the lignosulfonate and the mixture added (with or without other additives) to the dry cement or to the aqueous cement slurry or to the water to be used in forming the slurry. Alternatively, these additives may be introduced separately in either order or concurrently (with or without other additives) into the dry cement or into the aqueous cement slurry or into the water to be used in forming the slurry. For best results the aqueous cement slurries of this invention, irrespective of the method in which they are formulated, should be used in the cementing operation within a relatively short time after preparation, e.g., within a few hours. Since the additives react with each other in the presence of water to form a gelatinous phase, it is desirable to keep the formulations that contain both of them dry until the cement slurry is formed. For the same reason it is preferable to introduce at least one of these two types of additives into the slurry after it has been formed or while it is being formed, rather than introducing both before it is formed.

It is possible, though not essential, to include in the compositions of this invention conventional quantities of conventional additives used in well cement slurries. For example, materials such as calcium chloride, sodium chloride, plaster of Paris, sodium silicate ($Ni_2SiO_2$), sea water, or the like, may be employed. A feature of this invention is that sea water may be used without adverse consequences, and this is advantageous in situations such as offshore drilling where sea water is plentiful. Other cementing additives may also be employed in the compositions of this invention, provided of course that they do not materially impair the effectiveness of the fluid-loss-control additive system of this invention with whim they are employed. Among the other types of conventional additives that are deemed feasible for use in the compositions of this invention are light-weight additives (e.g., bentonite, diatomaceous earth, Gilsonite, coal, expanded perlite, nitrogen, fly ash, sodium silicate, etc.), heavy-weight additives (e.g., hematite, ilmenite, barite, sand, salt, etc.) cement retarders (e.g., carboxymethyl hydroxyethyl cellulose, saturated salt, borax, etc.), filtration control additives, cement dispersants (friction reducers), mud decontaminants, silica flour, radioactive tracers, dyes, hydrazine, fiber, gypsum, and others. The suitability and amount of such ancillary additives will in many cases be readily apparent to those skilled in the art, and in any event can be readily determined by the simple expedient of running a few laboratory tests.

The amounts of the polymer of monoallylamine and of the sulfonated polymer used in the compositions of this invention may be varied within reasonable limits. When furnished in the form of an additive combination, the amount of polymer of monoallylamine in the dry mixture will normally fall in the range of from 0.05 to 10 and preferably from 1 to 5 parts by weight per part by weight of the sulfonated polymer. The factor of chief importance is to use an amount of the sulfonated polymer that upon addition of water interacts with the amount of the polymer of monoallylamine being used in the formulation to form a gelatinous material that effectively minimizes fluid loss from the slurry during its use in a well cementing operation, yet does not cause the formation of an excessively viscous, umpumpable mixture. Accordingly, it is generally recommended that in the cement-containing systems of this invention the amount of polymer of monoallylamine fall in the range of from 0.5 to 10, preferably from 1 to 5 parts by weight per each 100 parts by weight of cement and the amount of sulfonated polymer fall in the range of from 0.5 to 10, preferably from 1 to 5 parts by weight per each 100 parts by weight of cement, although departures from these ranges may be feasible and may be utilized if determined to be suitable in any given instance, for example by means of a few simple tests.

In order to demonstrate the efficacy of the fluid-loss-control additive systems of this invention, a group of tests were conducted using the standard test procedures essentially as described in API Specification for Materials and Testing for Well Cements, Second Edition, June 15, 1984, Section 5, entitled "Preparation of Slurry" (pages 16-17), Section 9 entitled "Atmospheric Pressure Consistometer" (page 32), and Appendix F entitled "Fluid-Loss Test (Tentative)" (pages 73-75). In these tests a Class H cement was used and a temperature of 66° G (150° F) was maintained during the 20 minute period in the consistometer. In essence, therefore, each test involved preparing the slurry including additive(s), transferring the slurry from the blender to the consistometer preheated to 66° G (150° F) stirring the slurry for 20 minutes, transferring the slurry from the consistometer to the preheated fluid-loss cell at 66° G (150° F) closing the cell, applying 6,9 KPa (1,000 psig) to top of the cylinder, and collecting and measuring the volume of the filtrate

emanating from the bottom of the cell as a function of time.

The results of these tests are summarized in Table I. The additives used in the tests and the abbreviations applied to them in the table are as follows:

Fluid-Loss-Control Additives

A = Poly(monoallylamine hydrochloride), 150,000 Mw from Nitto Boseki Co. Ltd.
B = Poly(monoallylamine hydrochloride), 10,000 Mw from Nitto Boseki Co. Ltd.
C = Commercially-available fluid-loss-control additive; reportedly one of the best on the market
D = Another effective commercially-available fluid-loss-control additive

Sulfonated Polymers

Lig = Lignosulfonate salts (mainly Na and Ca salts) available from Reed Lignin as Marasperse CK-22
Naph = A condensed naphthalene sulfonate available from Diamond Shamrock as Lomar D

Other Additives

$CaCl_2$ = Calcium chloride
NaCl = Sodium chloride

Table I -- Cement Fluid-Loss Tests

| Ex. No. | Fluid-Loss Additive | | Sulfonated Polymer | | Other Additive | | Dehydration Time, min. | Filtrate Vol., mL | Fluid Loss, mL/30 min. |
|---|---|---|---|---|---|---|---|---|---|
| | Additive | Conc., wt% | Additive | Conc., wt% | Additive | Conc., wt% | | | |
| Formulations Using Ingredients of This Invention | | | | | | | | | |
| 1 | A | 1.35 | Lig | 1.00 | $CaCl_2$ | 0.3 | 0.83 | 35 | 210 |
| 2 | A | 2.00 | Lig | 1.63 | $CaCl_2$ | 0.3 | Test not run; System too viscous to mix | | |
| 3 | A | 2.00 | Lig | 0.66 | $CaCl_2$ | 0.3 | 8.00 | 32 | 62 |
| 4 | A | 1.23 | Lig | 0.66 | $CaCl_2$ | 0.3 | 0.38 | 34 | 299 |
| 5 | A | 2.00 | Naph | 0.50 | NaCl | 1.0 | 2.93 | 35 | 111 |
| 6 | A | 2.00 | Lig | 0.66 | $CaCl_2$ | 0.3 | 19.3 | 30 | 37 |
| Control or Comparative Formulations | | | | | | | | | |
| 7 | None | None | None | None | None | None | 0.03 | 44 | -* |
| 8 | None | None | Lig | 0.66 | $CaCl_2$ | 0.3 | 0.09 | 40 | -* |
| 9 | A | 2.00 | None | None | None | None | 0.10 | 26 | -* |
| 10 | B | 1.23 | Lig | 0.66 | $CaCl_2$ | 0.3 | 0.10 | 40 | -* |
| 11 | C | 1.23 | Lig | 0.66 | None | None | 5.50 | 28 | 65 |
| 12 | C | 1.23 | None | None | None | None | 0.23 | 35 | ca 400 |
| 13 | D | 1.23 | Lig | 1.00 | $CaCl_2$ | 0.3 | 0.93 | 29 | 164 |

\- - - - - - -

* Fluid loss so rapid that a calculated value has no significance

The data in Table I indicate that effective fluid loss control can be achieved by the practice of this invention. Example 2 illustrates the importance of avoiding use an excessive amount of the sulfonated polymer when formulating the compositions of this invention. Examples 8 And 9 illustrate the need for utilizing both components of the fluid-loss-control systems of this invention. Example 10 indicates that in the particular system and proportions tested, poly(monoallylammonium chloride) with a weight average molecular weight above 10,000 would have been more suitable.

Another group of standard tests still further demonstrated the efficacy of this invention. Besides using the test procedures employed in Table I, in this group of tests the stabilities of the cement slurries were determined by use of the standard "Free Water" test as described in Section 6 of the API Specification for Materials and Testing for Well Cements, entitled "Determination of Free Water Content of Slurry". The results of this group of tests are summarized in Table II. The additives used in these tests and the abbreviations applied to them in Table II are as follows:

Fluid-Loss-Control Additives

- B = Poly(monoallylamine hydrochloride), 10,000 Mw from Nitto Boseki Co. Ltd.
- C = Commercially-available fluid-loss-control additive; reportedly one of the best on the market
- E = Polyallylamine prepared from poly(monoallylammonium chloride), 10,000 Mw (from Nitto Boseki Co. Ltd.) neutralized to pH 9 with sodium hydroxide
- F = Polyallylamine prepared from poly(monoallylammonium chloride), 150,000 Mw (from Nitto Boseki Co. Ltd.) neutralized to pH 9 with sodium hydroxide

Sulfonated Polymer

- Lig = Lignosulfonate salts available from Reed Lignin as Marasperse CK-22

Other Additive

- $CaCl_2$ = Calcium chloride

Table II -- Cement Fluid-Loss and Slurry Stability Tests

| Ex. No. | Fluid-Loss Additive: Additive | Fluid-Loss Additive: Conc., wt% | Sulfonated Polymer: Additive | Sulfonated Polymer: Conc., wt% | Other Additive: Additive | Other Additive: Conc., wt% | Dehydration Time, min. | Filtrate Vol., mL | Fluid Loss, mL/30 min. | Free* Water |
|---|---|---|---|---|---|---|---|---|---|---|
| Formulations Using Ingredients of This Invention | | | | | | | | | | |
| 14 | B | 1.23 | Lig | 0.66 | $CaCl_2$ | 0.3 | 0.1 | 40 | 657 | - |
| 15 | B | 2.00 | Lig | 0.66 | None | - | 0.5 | 49 | 383 | 13 |
| 16 | E | 2.00 | Lig | 0.66 | None | - | 3.25 | 40 | 121 | 0 |
| 17 | F | 2.00 | Lig | 0.66 | None | - | 2.0 | 37.5 | 142 | 0 |
| 18 | F | 2.00 | Lig | 0.66 | $CaCl_2$ | 0.3 | 1.25 | 29 | 147 | 0 |
| Control or Comparative Formulations | | | | | | | | | | |
| 19 | None | None | Lig | 0.66 | None | - | 0.08 | 65 | 1249 | 42 |
| 20 | C | 1.23 | Lig | 0.66 | None | - | 0.5 | 33 | 192 | 0 |

\- - - - - - -

* Expressed as mL of water that separated divided by the total volume in mL of the cement slurry, multiplied by 1000

In Examples 14, 16-18 no evidence was seen of solids separation as indicated by streaking on inner graduated cylinder walls and there was no evidence of any settling of dense material in the bottom of the cylinder. In the control run of Example 19 significant water separation occurred. Also, Example 15 showed significant water separation indicating the need for calcium chloride with the poly(monoallylammonium chloride) used in this example.

A number of monoallylamine polymers were crosslinked and subjected to the foregoing test procedures. Examples 21 through 28 describe the manner by which these crosslinked polymers were formed.

Example 21

A 33 weight percent solution of polyallylamine hydrochloride (Nitto Boseki Co., Ltd.) with a weight average molecular weight of 10, 000 was prepared in a beaker using demineralized water. Using sodium hydroxide pellets, the pH of the solution was adjusted to 8.5. Then, 3, 500 ppm of epichlorohydrin based on the weight of the original poly(monoallylammonium chloride) was added to the solution and the beaker was immersed in a preheated oil bath. Crosslinking was carried out at 75° C for 30 minutes. The resulting solution was then cooled to 25° C. The resulting crosslinked product had an initial Brookfield Viscosity of 275 cps and subsequently become considerably more viscous.

Example 22

The procedure of Example 21 was repeated in the same way with the exception that the proportion of the epichlorohydrin used was 5,000 ppm based on the weight of the initial poly(monoallylammonium chloride). The crosslinked product was a non-Newtonian fluid.

Example 23

Utilizing the same procedure as in Example 21, polyallylamine hydrochloride (Nitto Boseki Co., Ltd.) having a weight average molecular weight of 150,000 was crosslinked with epichlorohydrin in the amount of 150 ppm based on the weight of the initial polyallylamine hydrochloride. The crosslinked product was a non-Newtonian fluid.

Example 24

A 30 weight percent solution of polyallylamine hydrochloride (Nitto Boseki Co., Ltd. ) with a weight average molecular weight of 10, 000 was prepared in a beaker using demineralized water. The solution was 50% neutralized by adding sodium hydroxide pellets (22 wt %) which increased the pH to 9.1. After the NaOH dissolved, the solution was transferred to a round bottomed flask equipped with a reflux condenser, and 8,000 ppm of ethylene dichloride based on the weight of the original poly(monoallylammonium chloride) was added to the solution. The mixture was heated with stirring to 80 to 90° C and held at this temperature for 30 to 60 minutes. The resulting solution was then cooled to 25° C. The crosslinked product exhibited an initial Brookfield Viscosity of 160 cps.

Example 25

The procedure of Example 24 was repeated in the same way with the exception that the proportion of the ethylene dichloride used was 10,000 ppm based on the weight of the initial poly(monoallylammonium chloride). The crosslinked product gave an initial Brookfield Viscosity of 414 cps.

Example 26

Utilizing the same procedure as in Example 24, polyallylamine hydrochloride (Nitto Boseki Co., Ltd.) having a weight average molecular weight of 150,000 was crosslinked with ethylene dichloride in the amount of 50 ppm based on the weight of the original polyallylamine hydrochloride.

Example 27

The procedure of Example 26 was repeated in the same way with the exception that the proportion of the ethylene dichloride used was 100 ppm based on the weight of the original monoallylamine polymer. The crosslinked product gave a Brookfield Viscosity of 1.5 million cps.

Example 28

The procedure of Example 27 was repeated in the same way except that in this case the proportion of

the ethylene dichloride used was 300 ppm based on the weight of the original monooallylamine polymer. The crosslinked product exhibited a Brookfield Viscosity of over 8 million cps.

The fluid-loss-control additives of Examples 21, 22 and 23, a commercially available polyethyleneimine fluid-loss-control additive (Additive "G"), and a commercially available polyethylene polyamine fluid-loss-control additive (Additive "H") were tested as above. In addition, control tests were run wherein no fluid-loss-control additive was used. All tests samples contained lignosulfonate salt available from Reed Lignin as Marasperse CK-22.

The results of these tests are summarized in Table III.

Table III -- Cement Fluid-Loss and Slurry Stability Tests

| Fluid-Loss Control | | Lignosulfonate | Other Additive | | Dehydration | Filtrate | Fluid Loss, | Free* |
|---|---|---|---|---|---|---|---|---|
| Additive | Conc., wt% | Conc., wt% | Additive | Conc., wt% | Time, min. | Vol., mL | mL/30 min. | Water |
| Ex. 21 | 2.0 | 0.66 | None | - | 30 | 17 | 17 | 18 |
| Ex. 22 | 2.0 | 0.66 | None | - | 24 | 29 | 32 | 0 |
| Ex. 23 | 2.0 | 0.66 | None | - | 30 | 17 | 17 | 0 |
| G | 1.23 | 1.0 | $CaCl_2$ | 0.3 | 0.93 | 29 | 164 | - |
| H | 1.23 | 0.66 | None | - | 5.5 | 28 | 65 | - |
| None | None | 0.66 | None | - | 0.08 | 65 | 1249 | 42 |

* Expressed as mL of water that separated divided by the total volume in mL of the cement slurry, multiplied by 1000

In another series of tests the crosslinked products of Examples 24 through 28 inclusive were subjected to the fluid loss test procedure referred to above. A commercially-available fluid-loss-control additive was also tested, as was a sample of polyallylamine hydrochloride ("PAA-HCl") as received from Nitto Boseki Co., Ltd. Each composition tested contained 0.66 weight percent of lignosulfonate salt. Table IV summarizes the results of this group of tests.

Table IV -- Cement Fluid-Loss Tests

| Fluid-Loss-Control Additive | | Dehydration | Filtrate | Fluid Loss, |
|---|---|---|---|---|
| Additive | Conc., wt% | Time, min. | Vol., mL | mL/30 min. |
| Ex. 24 | 2.0 | 5 | 47 | 114 |
| Ex. 25 | 2.0 | 3.5 | 28 | 82 |
| Ex. 26 | 1.0 | 0.11 | 30 | 500 |
| Ex. 27 | 1.5 | 1.25 | 27 | 132 |
| Ex. 28 | 2.0 | 2.3 | 26 | 93 |
| PAA-HCl | 2.0 | 35 | 30 | 28 |
| Comm'l | 2.0 | 60 | 20 | 17 |

As noted above, even essentially water-insoluble polymers of monoallylamine can be used in the practice of this invention. To illustrate, the essentially water-insoluble phosphate and sulfate polymers were prepared from allylammonium phosphate and allylammonium sulfate using the procedures reported in U. S. Pat. No. 4, 504,640. In addition, a sample of the phosphate polymer was converted to the water-soluble hydrochloride polymer (intrinsic viscosity 0.419) by treatment with concentrated hydrochloric acid. The hydrochloride polymer ("PAAH") and both essentially water-insoluble products, poly(monoallylammonium phosphate) ("PAAP") and poly(monoallylammonium sulfate) ("PAAS"), as well as 10,000 Mw polyallylamine hydrochloride ("PAA-HCl", Nitto Boseki Co., Ltd.), were subjected to the same standard test procedures previously described, with but one exception. Since PAAP and PAAS are essentially water insoluble, each was ground in a Waring blender in the presence of dry Portland cement before mixing with water. The sulfonate polymer used was sodium lignosulfonate ("Lig"). The test results, in which some of the systems additionally contained sodium chloride, are shown in Table V.

Table V -- Cement Fluid-Loss Tests

| Additive | Fluid-Loss-Control Additive Conc. wt% | Lig Conc. wt% | NaCl Conc. wt% | Dehydration Time, min. | Filtrate Vol., mL | Fluid Loss, mL/30 min. |
|---|---|---|---|---|---|---|
| None | - | - | - | 0.06 | 42 | 955 to 1200 |
| None | - | - | 1.5 | 0.06 | 26 | 581 |
| PAAP | 3.5 | - | - | 0.07 | 29.5 | 626 |
| PAAP | 3.5 | - | 1.5 | 0.25 | 28 | 307 |
| PAAP | 3.5 | 0.66 | 1.5 | 0.31 | 28.5 | 281 |
| PAAP | 2.5 | - | 1.5 | 0.12 | 28 | 450 |
| PAAS | 3.5 | - | - | 0.07 | 31 | 658 |
| PAAS | 3.5 | 0.66 | - | 0.28 | 37 | 380 |
| PAAH | 2.0 | 0.66 | - | 12.3 | 33.5 | 52 |
| PAA-HCl | 2.0 | 0.66 | - | 0.5 | 49 | 383 |

As will now be readily apparent to those skilled in the art, the fluid-loss-control additive systems of this invention may be employed with a wide variety of conventional well cements, including those of API Classes A through F, whether of the Ordinary, Moderate, or High Sulfate Resistant Types.

In the practice of this invention use may be made of mixtures of different polymers of monoallylamine of the type referred to hereinabove. Likewise, in the practice of this invention the sulfonated polymer may be (a) a mixture of two or more different lignosulfonates, (b) a mixture of two or more different condensed naphthalene sulfonates, (c) a mixture of two or more different sulfonated vinyl aromatic polymers, (d) a mixture of one or more lignosulfonates and one or more condensed naphthalene sulfonates, (e) a mixture of one or more, lignosulfonates and one or more sulfonated vinyl aromatic polymers, (f) a mixture of one or more condensed naphthalene sulfonates and one or more sulfonated vinyl aromatic polymers, (g) a mixture of one or more lignosulfonates, one or more condensed naphthalene sulfonates and one or more sulfonated vinyl aromatic polymers, or the like. It will also be appreciated, that previously known fluid-loss-control additives may be used in conjunction with the fluid-loss-control additive combinations of this invention, provided of course that each previously known fluid-loss-control additive so used does not significantly impair the effectiveness of the system(s) of this invention with which it is used.

## Claims

1. A fluid-loss-control additive composition comprising in combination, an anhydrous mixture of (i) a lignosulfonate polymer or a condensed naphthalene sulfonate polymer or a sulfonated vinylaromatic polymer or any combination thereof and (ii) an unmodified or chemical modified polymer of monoallylamine represented by the general formula:

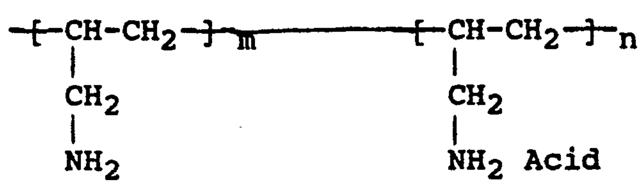

where m is a number from zero to 100,000 and n is a number from zero to 100,000, the sum of m plus n being in the range of 10 to 100,000, said polymer of monoallylamine, when chemically modified being further characterized by (a) containing small quantities of polymerizable comonomer containing two or more double bonds in the molecule, or (b) being crosslinked or bridged with small quantities of a crosslinking agent having two or more groups reactable with an amino group.

2. A composition as claimed in claim 1 in which said allylamine polymer is crosslinked with a crosslinking agent having two or more groups reactable with the amino group.

3. A composition as claimed in claim 1 in which the monoallylamine polymer is a water-soluble polymer of monoallylamine.

4. A composition as claimed in claim 3 which further comprises calcium chloride and/or sodium chloride.

5. A dry cement formulation suitable for producing an aqueous well cement slurry for use in cementing subterranean well formations, which comprises in combination, an anhydrous mixture of uncured cement and an additive composition as claimed in any of the preceding claims, the said composition being present in an amount sufficient to produce, upon the addition of water, a gelatinous material that tends to plug porous zones and minimize premature water loss from the well cement slurry when present in the subterranean well formation.

6. Method of producing an aqueous well cement slurry for cementing subterranean well formations which comprises adding water to a combination of uncured cement, and a sulfonated polymer and a monoallylamine polymer as defined in any one of claims 1 to 4 in an amount sufficient to produce a gelatinous material that tends to plug porous zones and minimize premature water loss from the well cement slurry when present in the subterranean well formation.

**Revendications**

1. Composition d'additif destinée à limiter la perte de fluide, comprenant en association un mélange anhydre (i) d'un polymère de lignosulfonate ou d'un polymère de naphtalènesulfonate condensé ou d'un polymère vinyl-aromatique sulfoné ou toute association de ces composants et (ii) d'un polymère non modifié ou modifié chimiquement d'une monoallylamine, représenté par la formule générale :

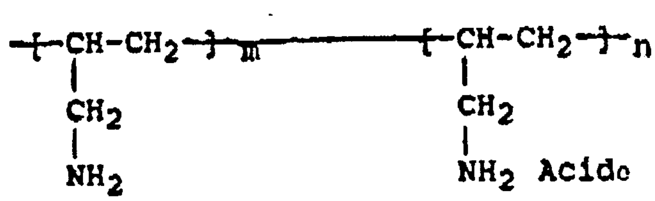

dans laquelle m est un nombre de 0 à 100 000 et n est un nombre de zéro à 100 000, la somme m plus n se situant dans la plage de 10 à 100 000, ledit polymère de monoallylamine étant en outre caractérisé, lorsqu'il est modifié chimiquement, par le fait (a) qu'il contient de petites quantités d'un comonomère polymérisable renfermant deux ou plus de deux doubles liaisons dans sa molécule ou (b) qu'il est réticulé ou ponté avec de petites quantités d'un agent de réticulation portant deux ou plus de deux groupes aptes a réagir avec un groupe amino.

2. Composition suivant la revendication 1, dans laquelle le polymère d'allylamine est réticulé avec un agent de réticulation portant deux ou plus de deux groupes aptes à réagir avec le groupe amino.

3. Composition suivant la revendication 1, dans laquelle le polymère de monoallylamine est un polymère hydrosoluble de monoallylamine.

4. Composition suivant la revendication 3, qui comprend en outre du chlorure de calcium et/ou du chlorure de sodium.

5. Formulation de ciment à sec apte à être utilisée pour produire une suspension aqueuse de ciment destinée à être utilisée dans la cimentation de formations souterraines, qui comprend en association un mélange anhydre de ciment non durci et d'une composition d'additif suivant l'une quelconque des revendications précédentes, ladite composition étant présente en une quantité suffisante pour produire, par addition d'eau, une matière gélatineuse qui tend à obturer des zones poreuses et à minimiser une perte d'eau prématurée de la suspension de cimentation d'un puits lorsqu'elle est présente dans la formation souterraine.

6. Procédé de préparation d'une suspension aqueuse de ciment pour puits, destinée à la cimentation de formations souterraines, qui consiste à ajouter de l'eau à un mélange de ciment non durci et d'un polymère sulfoné et d'un polymère de monoallylamine tel que défini dans l'une quelconque des revendications 1 à 4 en une quantité suffisante pour produire une matière gélatineuse qui tend à obturer les zones poreuses et à minimiser une perte d'eau prématurée de la suspension de cimentation du puits lorsqu'elle est présente dans la formation souterraine.

## Patentansprüche

1. Zusammensetzung als Zusatz Für eine Fluid-Loss-Steuerung, umfassend in Kombination eine wasserfreie Mischung aus
   (i) einem Lignosulfonat-Polymer oder einem kondensierten Naphthalinsulfonat-Polymer oder einem sulfonierten vinylaromatischen Polymer oder irgendeiner Kombination daraus und
   (ii) einem unmodifizierten oder chemisch modifizierten Polymer des Monoallylamins der allgemeinen Formel

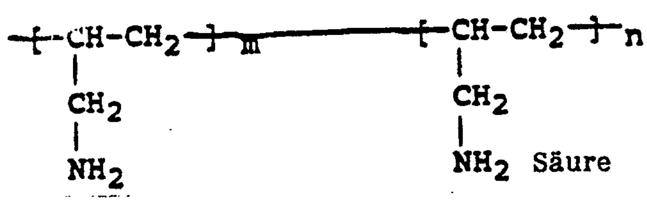

   worin m eine Zahl von 0 bis 100.000 ist und n eine Zahl von 0 bis 100.000 ist, wobei die Summe (m + n) im Bereich von 10 bis 100.000 liegt, wobei das Monoallylamin-Polymer dann, wenn es chemisch modifiziert ist, weiter dadurch gekennzeichnet ist, daß es
   (a) kleine Mengen eines polymerisierbaren Comonomers enthält, das zwei oder mehr Doppelbindungen im Molekül enthält, oder
   (b) mit kleinen Mengen eines Vernetzungsmittels mit zwei oder mehr Gruppen vernetzt oder verbrückt ist, die mit einer Aminogruppe reagieren können.

2. Zusammensetzung nach Anspruch 1, worin das Allylamin-Polymer mit einem Vernetzungsmittel mit zwei oder mehr Gruppen vernetzt ist, die mit der Aminogruppe reagieren können.

3. Zusammensetzung nach Anspruch 1, worin das Monoallylamin-Polymer ein wasserlösliches Polymer des Monoallylamins ist.

4. Zusammensetzung nach Anspruch 3, welche außerdem Calciumchlorid und/oder Natriumchlorid umfaßt.

5. Für die Herstellung wäßriger Zementaufschlämmungen für Schächte zur Verwendung bei der Zementierung unterirdischer Schachtformationen geeignete Trockenzement-Formulierung, welche in Kombination eine wasserfreie Mischung aus unabgebundenem Zement und einer Zusammensetzung als Zusatz umfaßt, wie sie in irgendeinem der vorangehenden Ansprüche beansprucht wurde, wobei die Zusammensetzung in einer Menge zugegen ist, die ausreicht, um bei Zusatz von Wasser ein gelatineartiges Material zu ergeben, das zu einer Verstopfung poröser Zonen und einer Minimierung eines vorzeitigen Wasserverlustes aus der Zementaufschlämmung für Schächte führt, wenn es in der unterirdischen Schachtformation zugegen ist.

6. Verfahren zur Herstellung einer wäßrigen Zementaufschlämmung für Schächte zur Zementierung

unterirdischer Schachtformationen, welches den Zusatz von Wasser zu einer Kombination aus unabgebundenem Zement und einem sulfonierten Polymer und einem Monoallylamin-Polymer gemäß irgendeinem der Ansprüche 1 bis 4 in einer Menge umfaßt, die ausreichend ist, um ein gelatineartiges Material zu ergeben, das zu einer Verstopfung poröser Zonen und einer Minimierung eines vorzeitigen Wasserverlustes aus der Zementaufschlämmung für Schächte führt, wenn es in der unterirdischen Schachtformation zugegen ist.